# EUROPEAN PATENT APPLICATION

(11) **EP 2 693 429 A1**
(43) Date of publication of application: **05.02.2014**
(21) Application number: 12382311.4
(22) Date of filing: 02.08.2012
(51) Int. Cl.: G10L 17/26

(54) **System and method for analyzing voice communications**

(71) Applicant: JaJah Ltd, Ra'Anana (IL); Telefónica, S.A., 28013 Madrid (ES)
(72) Inventor: Neystadt, John Eugene, Ra'Anana (IL); Keyser, Benjamin, Ra'Anana (IL); Anguera Miro, Xavier, Ra'Anana (IL); Eshed, Boaz, Ra'Anana (IL); Artunedo Guillen, David, Ra'Anana (IL)
(74) Representative: Cordina, Kevin John

(57) **Abstract**

Systems and methods to analyze a voice communication to identify changes in the emotional state of a speaker of the voice communication. The system comprises a voice communication manager configured to receive data representing the speech of the voice communication and an emotion analysis service in communication with the voice communication manager. The emotion analysis service is configured to perform emotion analysis on the data representing the speech during the voice communication and output data indicative of a change in the emotional state of the speaker in real-time. The data indicative of a change in the emotional state of the speaker typically comprises information identifying the magnitude of the change. The data indicative of a change in the emotional state of the speaker may then be provided to an end-user device in real-time so that it can be output to the user during the voice communication.

## Description

### Technical Field

The present invention relates to systems and methods for analyzing voice communications.

### Background

It is a desirable skill for an individual to be able to keep their composure when speaking with another individual (e.g. via telephone call). However, this is a difficult skill for many individuals to master, particularly when the conversation concerns crucial or sensitive topics related to business or personal affairs. Accordingly, it would be desirable for a communication system to provide the user with information on their emotional state during a conversation so that they can adjust or alter their behavior as necessary.

The embodiments described below are not limited to implementations which solve any or all of the disadvantages of known methods and systems.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a first aspect there is provided a system to analyze a voice communication, the system comprising: a voice communication manager configured to receive data representing the speech of the voice communication; an emotion analysis service in communication with the voice communication manager, the emotion analysis service configured to perform emotion analysis on the data representing the speech during the voice communication and output data indicative of a change in the emotional state of a speaker of the voice communication in real-time, the data indicative of a change in the emotional state of the speaker comprising information identifying the magnitude of the change; and a notification service in communication with the emotion analysis service, the notification service configured to notify an end-user device in real-time of the change in the emotional state of the speaker and the magnitude of the change.

In a second aspect there is provided a computer-implemented method to analyze a voice communication, the method comprising: receiving at a voice communication manager data representing the speech of the voice communication; performing using an emotional analysis service an emotion analysis on the data representing the speech during the voice communication; outputting using the emotion analysis service data indicative of a change in the emotional state of a speaker of the voice communication in real-time, the data indicative of a change in the emotional state of the speaker comprising information identifying the magnitude of the change; and notifying, using a notification service, an end-user device in real-time of the change in the emotional state of the speaker and the magnitude of the change.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a schematic block diagram of a system for analyzing voice communications;
Figure 2 is a method for analyzing voice communications using the system of Figure 1; and
Figure 3 is a block diagram of an exemplary end-user device of Figure 1.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

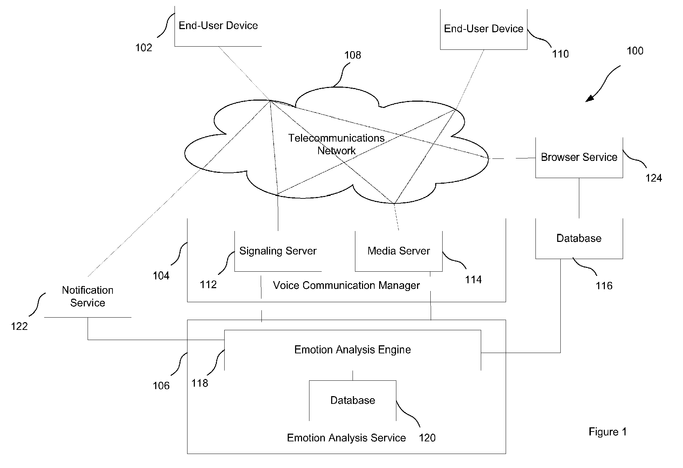

Figure 1 shows a block diagram of a system 100 for analyzing voice communications to identify a change in the emotional state of one or more speakers of the voice communication. The system 100 includes an end-user device 102 for making or receiving a voice communication, a voice communication manager 104 for receiving data representing the speech of the voice communication, and an emotion analysis service 106 for performing emotion analysis on the data representing the speech during the voice communication and outputting data indicative of a change in the emotional state of a speaker of the voice communication. The data indicative of a change in the emotional state of the speaker may then be provided to the end-user device 102 in real-time so that it can be output to the user during the voice communication.

The end-user device 102 allows a user to make or receive voice communications over a telecommunications network 108. For example, end-user device 102 may allow a user to make or receive telephone calls over the telecommunication network 108 to/from another device, such as end-user device 110.

The term "voice communication" is used herein to indicate any communication using speech and is intended to include, but is not limited to, telephone calls, teleconference calls, video calls and voicemails. As will be apparent, where the techniques described herein are applied to video calls they are applied to the audio part of the communications.

The end-user device 102 may be a smart phone or may be a computer system configured to provide telephony functions to a user (for example a 'softphone' provided by an application running on a personal computer (PC) or portable computing device, or via a Web Browser on such device). The telephony functions are typically provided by communication applications running on the end-user device 102 which may be either installed applications from third parties or native applications provided as part of the device's operating system. For example, the end-user device 102 may be provided with a voice-over-IP (VoIP) client to conduct VoIP calls. As will be appreciated various combinations of telephony types may be utilized as is known in the art (for example, conventional telephony to VoIP calls).

The telecommunications network 108 may be any network, or combination of networks, capable of establishing a voice communication between end users. For example, the telecommunications network 108 may be a public switched telephone network (PSTN), a mobile telephone network, a data network (such as the Internet), a VoIP network or any combination thereof.

When a voice communication is made to or from an end-user device 102 subscribing to the relevant service, voice communication manager 104 receives data representative of the speech of the voice communication from the end-user device 102 via the telecommunications network 108. Once the voice communication manager 104 has received the data it relays the data to the emotion analysis service 106 for analysis. Typically this occurs during the course of the voice communication. However, it will be evident to a person of skill in the art that this may also occur after the completion of the voice communication.

In the embodiment shown in Figure 1, the voice communication manager 104 comprises a signaling server 112 and a media server 114. The signaling server 112 receives call signaling information from the end-user device 102 via the telecommunication network 108 and uses this information to establish a call with another device, such as end-user device 110. The call signaling information typically comprises information required to locate users (e.g. caller ID information, such as the calling party's number and name) and negotiate capabilities. The end-user devices 102 and 110 may be configured to use a standard signaling protocol such as SIP (Session Initiated Protocol) to transmit the signaling information.

The signaling server 112 may also copy the call signaling information and provide the copy to the emotion analysis service 106 to aid in the emotion analysis. For example, the emotion analysis service 106 may use the caller ID information to locate a speaker profile. This will be described in more detail below.

The media server 114 receives, via one or more media channels, data representative of the speech of the voice communication and relays the data between participating devices (e.g. end-user devices 102 and 110). The media server 114 also makes a copy of the data received via the media channel(s) and provides it to the emotion analysis service 106 for analysis. The end-user devices 102 and 110 may be configured to use a standard communication protocol such as RTP (Real Time Protocol) to transmit the speech data.

Where the voice communication is a telephone call between a first speaker using first end-user device 102 and a second speaker using second end-user device 110, the media server 114 receives, via a first media channel, data representative of the speech of the first speaker and relays it to the second end-user device 110. The media server 114 also receives, via a second media channel, data representative of the speech of the second speaker and relays it to the first end-user device 102. In addition to relaying the speech data between the devices, the media server 114 also makes a copy of the speech data received via the first and second media channels and provides it to the emotion analysis service 106 for analysis. To enable independent analysis of the speakers the data related to each media channel is typically provided to the emotion analysis service 106 in a separate stream or file.

The media server 114 typically receives the data in the form of audio signals. In some cases, the media server 114 forwards the audio signals to the emotion analysis service 106 so that the emotion analysis service 106 can perform the analysis in real time. In other cases, the media server 114 records the received audio signals as audio data files and forwards the audio data files to the emotion analysis service 106. The media server 114 may be configured to record the audio signals only if it has obtained the permission of the user and any other party to the voice communication.

A copy of the recorded data may also be archived in a storage device, such as database 116, for future reference. Where this is the case, data is also stored in the database 116 to identify the voice communication and link it to the appropriate user. Further information on the voice communication, for example timing and participants, may also be stored in the database 116.

Depending on the user's settings, data related to all or only a subset of the user's voice communications may be forwarded to the emotion analysis service 106. For example, the user may configure the system 100 to analyze only outgoing voice communications, only incoming voice communications, or only voice communications to and/or from a specific user or set of users. Furthermore, the system 100 may be configured to only analyze one side (e.g. one media channel) or one speaker of a voice communication.

The emotion analysis service 106 is in communication with the voice communication manager 104 and is configured to perform emotion analysis on the speech data. The emotion analysis service 106 outputs data representative of a change in emotional state of one or more speakers of the voice communication. For example, the emotion analysis service 106 may be configured to monitor the emotional state of the initiator of the call, the recipient of the call, or both the recipient and initiator of the call.

In some cases independent analysis of the speakers can be accomplished by analyzing the data received from each of the media channels separately. For example, where the voice communication is a call from a first speaker at a fist end-user device 102 to a second speaker at a second end-user device 110 the media server 114 receives two media channels. In this case each media channel comprises speech data relating to only one speaker. Specifically one media channel comprises data representing the speech of the first speaker and the other media channel comprises data representing the speech of the second speaker.

In other cases, such as in a conference call, media channels may comprise speech data for more than one speaker. To enable independent analysis of the speakers in these cases the emotion analysis service 106 may perform speaker detection on the received speech data to separate the speech data relating to each speaker prior to performing the emotion analysis. Any method of speaker detection may be used.

The emotion analysis service 106 may use the call signaling information to determine when it needs to perform speech detection. For example, if an end-user activates hand-free mode on the end-user device 102, the end-user device 102 may transmit a call signaling message to the voice communication manager 104. Since a call in hands-free mode may include more than one speaker on a particular media channel the emotional analysis service 106 may automatically perform speaker identification when it detects that one or more of the parties is using hand free mode. In other cases, specific telephone numbers may be used to trigger speaker identification. For example, as described below, a user may call a special or dedicated number to receive emotion analysis data on a live conversation (a conversation not via the telecommunications network). When the emotion analysis service 106 receives a voice communication to this number it may automatically perform speaker identification.

Any method of emotion analysis, such as voice intonation, may be used to analyze the emotion of a speaker. The term "emotion analysis" is not used herein to restrict the analysis to any type of emotion analysis, but rather to indicate that an analysis is performed of the speech data to extract information on a person's emotional state. That is, parameters such as intonation and pitch may be analyzed. The term does not, however, include a semantic analysis of the words spoken. Exemplary speech emotional analysis techniques are described in "Speech emotion analysis", Patrik N. Juslin and Klaus R. Scherer (2008), Scholarpedia, 3(10):4240 herein incorporated by reference.

In some cases the emotion analysis service 106 may use generic models (trained with a large pool of people), speaker-adapted models or a combination of generic and speaker-adapted models. For example, the emotion analysis service 106 may comprise an emotion analysis engine 118 and a database 120. The database 120 stores the generic and speaker-adapted models along with information identifying the speaker of the speaker-adapted models. For example, the caller ID information in the call signaling data may be used to identify the speaker.

If the emotion analysis engine 118 receives speech data for an unknown user the emotion analysis engine 118 retrieves the generic models from the database 120 and performs the emotion analysis using the generic models. Once the analysis is complete, the speech data may be used to generate a speaker-adapted model which is stored in the database 120. If, however, the emotion analysis engine 118 receives speech data for a known user the emotion analysis engine 118 may retrieve the speaker-adapted model from the database 120 and perform the emotion analysis using the speaker-adapted model. Once the analysis is complete, the speech data may be used to improve the speaker-adapted model. As described above, the emotion analysis engine 118 may use the caller ID information (i.e. phone number) in the call signaling data to determine whether the speaker is known or unknown.

The emotion data may comprise one or more values that represent the emotional state of the speaker. For example, the emotion analysis engine 118 may generate a numerical value for each of a plurality of predetermined emotions. The numerical value assigned to a particular emotion may represent the intensity of the emotion exhibited by the speaker. A higher numerical value may indicate a more intense emotion whereas a lower numerical value may indicate a less intense emotion. Any known technique for quantifying the emotions of a speaker may be used to generate the numerical values. For example, the emotion analysis engine 118 may be configured to use an algorithm such as Linear Prediction to generate the numerical values. As is known to those of skill in the art Linear Prediction uses energy, duration and pitch parameters to identify and quantify emotions.

The predetermined emotions may include, but are not limited to, one or more of: surprise, anger, fear, boredom, empathy, and irritation. Although example emotions have been given, these are exemplary only and any emotion may be utilized according to the principles described herein.

In some cases the emotion analysis engine 118 may be configured to monitor the numerical values and notify the end-user device 102 if any of the numerical values changes by more than a threshold value. Each emotion may be assigned a separate threshold value or all the emotions may have the same threshold value. In some cases, the emotion analysis engine 118 may only notify the end-user device 102 of the change in emotional state if the change lasted more than a predetermined period of time (e.g. 50 milliseconds). Each emotion may be assigned a separate predetermined period of time or all the emotions may have the same predetermined period of time. The threshold value(s) and the period of time value(s) may be fixed or configurable.

The emotion analysis service 106 may also archive the emotion data in a storage device, such as database 116, so it can be viewed and/or analyzed at a later date.

In the embodiment of Figure 1, the emotion analysis service 106 is in communication with a notification service 122. The notification service 122 receives data from the emotion analysis service 106 and issues notifications to the end-user device 102. For example, when a telephone call is analyzed by emotion analysis service 106 the notification service 122 may transmit a message to the end-user device 102 indicating a change in the emotional state of one or more speakers. As described above, the notification service 122 may be configured to transmit a message after the emotion analysis service 106 has detected a sudden or progressive change in the emotional state of the speaker(s). The notification service 122 may use any appropriate messaging format and/or protocol to notify the end-user device 102.

The notification service 122 is shown in Figure 1 as a discrete service, but it may also be integrated with other parts of the system as appropriate. For example, in some cases the notification service 122 may be integrated with the voice communication manager 104 and/or signaling server 120. For example, where the voice communication is a VoIP call that uses SIP as the signaling protocol, the signaling server 120 may be configured to notify the end-user device using the SIP SUBSCRIBE and NOTIFY mechanisms as described in RFC 3265. For example, the end-user device 102 may be configured to send a SIP SUBSCRIBER message at the beginning of the voice communication and the signaling server 120 will send SIP NOTIFY events to the end-user device 102. In certain embodiments the notification service 122 may be omitted without affecting the operation of the remaining parts of the system.

The end-user device 102 is in communication with the notification service 122 and/or the voice communication manager 104 and is configured to output the emotion data to the user during the voice communication. Providing the user with information about the speaker's emotional state during the voice communication allows the user to adjust their behavior or speech to control their own emotions or to address the emotions of the other party/parties to the voice communication. For example, if a user receives a notification that the system has detected that they are getting angry they can adjust their behavior before their anger gets out of control. Similarly, if a user receives a notification that the system has detected that the other party is getting bored they can quickly change the topic before they lose the other party's interest.

The end-user device 102 may be configured to output the emotion data to the user using any suitable means. For example, the end-user device 102 may be configured to present the emotion data visually such as via an icon or color, audibly via sounds, or physically via vibration of the end-user device 102. The term "physically" is used herein to mean that the emotion data is output or presented to the user in a way that the user can physically feel. Physical output means include, but are not limited to, vibration.

Specifically, in some cases, the end-user device 102 may be configured to change the background color of an associated display device based on the emotional state data received from the emotion analysis service 106. For example, the background of the display device may be changed to reflect the changed emotion and the magnitude of the change. For example, the background of the display device may be changed to red when it is detected that the speaker is angry and yellow when it is detected that the speaker is becoming angry.

In other cases, the end-user device 102 may be configured to vibrate in different patterns and strengths based on the changed emotion and the magnitude of the change. In other cases, the end-user device 102 may be configured to generate an audible tone or sound differing in length and pitch based on the changed emotion and the magnitude of the change. In other cases, the end-user device 102 may be configured to display an icon or graphical animation.

In still other cases, the end-user device 102 may be configured to present the emotional state data using a combination of the described output means.

The output of the emotion data to the user is typically controlled by an application running on the end-user device 102 which may be either an installed application from third parties or a native application provided as part of the device's operating system. For example, the end-user device 102 may be provided with an emotion client application to receive and present the emotion data.

The system 100 may also include a browser service 124 that is in communication with the database 116 and the end-user device 102 to allow a user to browse the archived voice communications. For example, an application or web browser on the end-user device 102 may display a list of all voice communications over a particular time period. Data relating to the timing and parties to the voice communications may be displayed as retrieved from the database 116. Options may be provided to replay the audio of a voice communication. If the audio is replayed the associated emotional state data stored in the database 116 may be provided to the end-user device 102. Search/filtering functions may be provided to allow a user to display only certain types of voice communications (e.g. only telephone calls or only voicemails).

The system 100 of Figure 1 may be used to provide information to the end-user device 102 on the emotional state of one or more parties to a voice communication established over the telecommunication network (e.g. a telephone call). Where the emotional state of the user of the end-user device 102 is provided to the end-user device 102 this is referred to herein as self-assessment. Where the emotional state of the other party to the voice communication is provided to the end-user device 102 this is referred to herein as other party assessment.

The system 100 of Figure 1 may also be used or provide information to the end-user device 102 on the emotional state of one or more parties to a voice communication that is not established over the telecommunications network (e.g. a voice communication where the parties communicate face to face, not via one or more end-user devices 102 or 110). In this case the analysis may be performed by establishing a telephone call from the end-user device 102 to a special phone number. When this special phone number is called the audio picked up from the end-user device's 102 local microphone is provided to the emotion analysis service 106. Similar to the teleconference example described above, since data related to multiple speakers will be sent over the same media channel, the emotion analysis service 106 would typically perform speaker detection to separate the data for different speakers prior to performing the analysis.

The term "service" is used to indicate a program or system which provides certain functions. For example, a notification service may provide the function of notifying an entity of an event. The service may take the form of a program running on a single computer system, or may be provided by a plurality of computing system configured to work together to provide the functions. The functions may be accessed and utilized via a network system, for example the Internet. Any service may be implemented in any way known to the person of skill in the art. Although the various services have been described separately, one or more of the services may be provided as part of a single service, or by a single program of a computer system. The description of the services separately is not intended to require any logical or physical separation.

Where the term "connected" has been utilized in this document, it is not intended to require a permanent, always-on, connection. Rather it is used in the sense that the connected entities are connected, when required, to exchange data. For example, two entities would be connected by the transmission of data from one entity to another through an IP network.

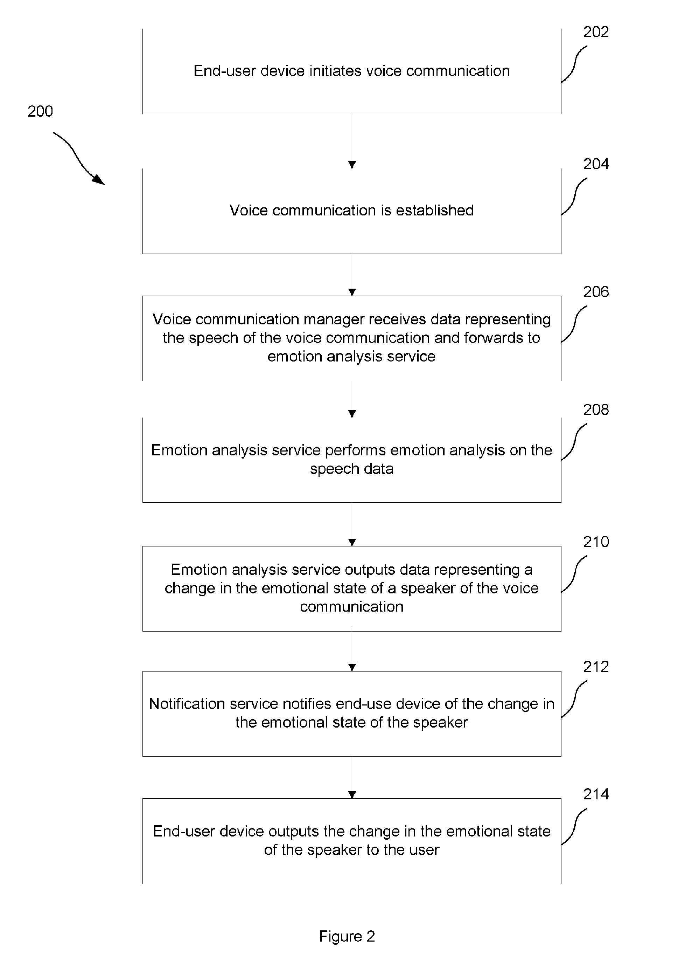

Reference is now made to Figure 2 which illustrates an exemplary method 200 for analyzing voice communications using the system of Figure 1. At step 202, an end-user device, such as end-user device 102, initiates a voice communication (e.g. a telephone call) with another device, such as end-user device 110, over the telecommunications network 108. Although the exemplary method 200 of Figure 2 describes the end-user device 102 as the initiator of the voice communication, it will be evident to the person of skill in the art that the method could similarly be applied to the situation where the end-user device 102 is the recipient of a voice communication initiated by another device.

At step 204, the voice communication manager 104 establishes the voice communication between the end-user device 102 and the other device, such as end-user device 110, over the telecommunications network 108.

At step 206, the voice communication manager 104 receives data representing the speech of the voice communication and forwards the data to the emotion analysis service 106 for analysis. As described above, where the voice communication manager 104 receives the data via two or more media channels, the voice communication manager 104 typically forwards the data from the individual media channels to the emotion analysis service 106 via separate streams or files to enable independent analysis of the speech of each party to the voice communication.

At step 208, the emotion analysis service 106 performs emotion analysis on the received data. Where the speech data comprises data related to a plurality of speakers (e.g. in where the voice communication is a teleconference call or a face to face conversation between the parties) the emotion analysis service 106 may perform speaker detection to separate the data related to each of the speakers. This enables independent analysis of the emotional state of each of the speakers.

As described above performing the emotion analysis on the received data may comprise assigning a numerical value to each of a plurality of predetermined emotions. Each numerical value may represent the intensity of the associated predetermined emotion exhibited by the speaker. For example, a higher numerical value may indicate a more intense emotion exhibited by the speaker and a lower numerical value may indicate a less intense emotion exhibited by the user. The plurality of predetermined emotions may comprise, but is not limited to, one or more of the following: surprise, anger, fear, boredom, empathy and irritation.

Performing the emotion analysis on the received data may further comprise identifying a change in the emotional state of the speaker when a numerical value changes by at least a threshold amount. In some cases a change in the emotional state of a speaker will only be identified when a numerical value changes by at least a threshold amount for a predetermined period of time (e.g. 50 milliseconds). As described above, each emotion may be assigned a separate threshold and/or predetermined time period or all the emotions may be assigned the same threshold and/or predetermined time period.

At step 210, the emotion analysis service 106 outputs data indicative of a change in the emotional state of a speaker of the voice communication in real-time. The speaker is typically a party to the voice communication and may be the initiator of the voice communication or the recipient of the voice communications. In some cases the emotional analysis service 106 may output data related to a plurality of speakers. For example, the emotional analysis service 106 may output data related to both the initiator and the recipient of the voice communication.

The data indicative of a change in the emotional state of a speaker may comprise information identifying the predetermined emotion associated with the numerical value that exceeded the threshold and the magnitude of the change. For example, where the numerical value associated with the anger emotion exceeds the threshold, the emotion analysis service 106 may output data that specifies that the anger emotion exhibited by the speaker has changed and by how much.

At step 212, the notification service 122 notifies the end-user device 102 of the change in the emotional state of the speaker in real-time. As described above, the notification service 122 may use any suitable message format and/or protocol to notify the end-user device 102 of the change.

At step 214, the end-user device 102 outputs the data indicative of a change in the emotional state of the speaker to the user during the voice communication. By providing the user with information about the speaker's emotional state during the voice communication the user can adjust their behavior or speech to control their own emotions or to address the emotions of the other party/parties to the voice communication.

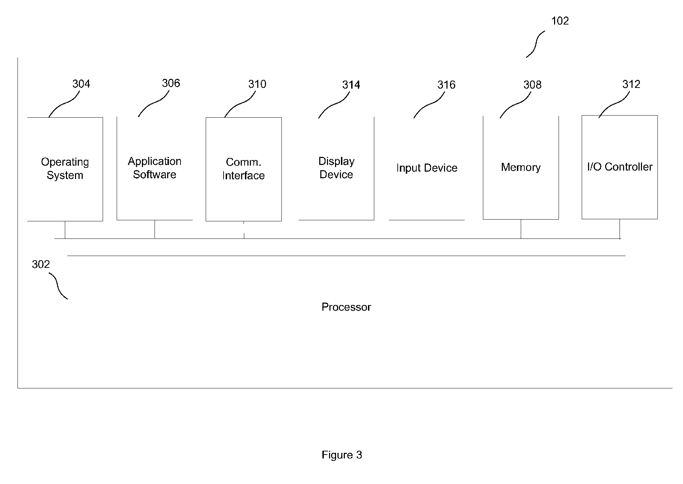

Reference is now made to Figure 3 which illustrates an exemplary end-user device 102 which may be implemented as any form of a computing and/or electronic device, and in which embodiments of the foregoing description may be implemented.

End-user device 102 comprises one or more processors 302 which may be microprocessors, controllers or any other suitable type of processors for processing computer executable instructions to control the operation of the device in order to run applications, such as the communication and emotion client applications referred to herein. In some examples, for example where a system on a chip architecture is used, the processors 302 may include one or more fixed function blocks (also referred to as accelerators) which implement a part of the method of operation of the end-user device 102 or applications described herein in hardware (rather than software or firmware). Platform software comprising an operating system 304 or any other suitable platform software may be provided at the end-user device 102 to enable application software 306 to be executed on the device.

The computer executable instructions may be provided using any computer-readable media that is accessible by end-user device 102. Computer-readable media may include, for example, computer storage media such as memory 308 and communications media. Computer storage media, such as memory 308, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 308) is shown within the end-user device 102 it will be appreciated that the storage may be distributed or located remotely and accessed via a network or other communication link (e.g. using communication interface 310).

The end-user device 102 also comprises an input/output controller 312 arranged to output display information to a display device 314 which may be separate from or integral to the end-user device 102. The display information may provide a graphical user interface. The input/output controller 312 is also arranged to receive and process input from one or more devices, such as a user input device 316 (e.g. a mouse or a keyboard). This user input may be used by the communications and emotion client applications. In an embodiment the display device 314 may also act as the user input device 316 if it is a touch sensitive display device. The end-user device 102 may also be provided with other functionality as is known for such devices. For example, the communication interface 310 may comprise a radio interface to a mobile telephone or other wireless communications system, and microphone, speaker, and camera may be provided for voice and video calling.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A system to analyze a voice communication, the system comprising:
a voice communication manager configured to receive data representing the speech of the voice communication;
an emotion analysis service in communication with the voice communication manager, the emotion analysis service configured to perform emotion analysis on the data representing the speech during the voice communication and output data indicative of a change in the emotional state of a speaker of the voice communication in real-time, the data indicative of a change in the emotional state of the speaker comprising information identifying the magnitude of the change; and
a notification service in communication with the emotion analysis service, the notification service configured to notify an end-user device in real-time of the change in the emotional state of the speaker and the magnitude of the change.

2. The system according to claim 1, wherein performing emotion analysis on the data representing the speech comprises assigning a numerical value to each of a plurality of predetermined emotions, each numerical value representing the intensity of the associated predetermined emotion exhibited by the speaker.

3. The system according to claim 2, wherein the plurality of predetermined emotions comprises at least one of surprise, anger, fear, boredom, empathy and irritation.

4. The system according to claim 2 or claim 3, wherein performing emotion analysis on the data representing the speech further comprises identifying a change in the emotional state of the speaker when a numerical value changes by a threshold amount.

5. The system according to claim 4, wherein the data indicative of a change in the emotional state of the speaker comprises information identifying the predetermined emotion associated with the numerical value that exceeded the threshold.

6. The system according to claim 4 or claim 5, wherein a change in the emotional state of the speaker is only identified when the numerical value changes by the threshold amount for a predetermined period of time.

7. The system according to any preceding claim, wherein the notification service is configured to notify the end-user device using the Session Initiation Protocol (SIP).

8. The system according to any preceding claim, further comprising the end-user device, the end-user device configured to output the data indicative of a change in the emotional state of the speaker to the user.

9. The system according to claim 8, wherein the data indicative of a change in the emotional state of the speaker is output to the user visually, audibly or physically.

10. The system of any preceding claim, wherein the speaker is one of the initiator of the voice communication and the recipient of the voice communication.

11. The system of any preceding claim, wherein the data representing the speech of the voice communication comprises data related to a plurality of speakers and performing emotion analysis on the data representing the speech comprises performing speaker detection to identify the data related to each of the plurality of speakers.

12. A computer-implemented method to analyze a voice communication, the method comprising:
receiving at a voice communication manager data representing the speech of the voice communication;
performing using an emotional analysis service emotion analysis on the data representing the speech during the voice communication;
outputting using the emotion analysis service data indicative of a change in the emotional state of a speaker of the voice communication in real-time, the data indicative of a change in the emotional state of the speaker comprising information identifying the magnitude of the change; and
notifying, using a notification service, an end-user device in real-time of the change in the emotional state of the speaker and the magnitude of the change.
